# EUROPEAN PATENT SPECIFICATION

(11) **EP 2 563 725 B1**
(45) Date of publication and mention of the grant of the patent: **12.10.2016**
(21) Application number: 10795475.2
(22) Date of filing: 29.11.2010
(51) Int. Cl.: C02F 1/467, C02F 1/461, C25B 11/03, A61L 2/03, C02F 1/78

(54) **MEMBRANE-ELECTRODE ASSEMBLY, ELECTROLYTIC CELL USING THE SAME, METHOD AND APPARATUS FOR PRODUCING OZONE WATER, METHOD FOR DISINFECTION AND METHOD FOR WASTEWATER OR WASTE FLUID TREATMENT**
MEMBRAN-ELEKTRODENANORDNUNG, ELEKTROLYSEZELLE DAMIT, VERFAHREN UND VORRICHTUNG ZUR HERSTELLUNG VON OZONWASSER, DESINFEKTIONSVERFAHREN UND VERFAHREN ZUR BEHANDLUNG VON ABWASSER ODER ABFALLFLÜSSIGKEIT
ENSEMBLE MEMBRANE-ÉLECTRODE, CELLULE ÉLECTROLYTIQUE L'EMPLOYANT, PROCÉDÉ ET APPAREIL POUR PRODUIRE DE L'EAU OZONISÉE, PROCÉDÉ DE DÉSINFECTION ET PROCÉDÉ DE TRAITEMENT D'EAUX USÉES OU DE DÉCHETS LIQUIDES

(30) Priority: 02.09.2010 JP 2010197149; 30.04.2010 JP 2010105752
(43) Date of publication of application: 06.03.2013
(73) Proprietor: Aquaecos Ltd., Kanagawa 245-0016 (JP); De Nora Permelec Ltd, Fujisawa-shi Kanagawa 252-0816 (JP)
(72) Inventor: NITTA, Hideo, Yokohama-shi Kanagawa 245-0016 (JP); HOSONUMA, Masashi, Fujisawa-shi Kanagawa 252-0816 (JP)
(74) Representative: Blodig, Wolfgang
(86) International application number: PCT/JP2010/071769
(87) International publication number: WO 2011/135748

(56) References cited:
- EP-A1- 1 111 095
- JP-A- 2007 087 888
- JP-A- 2009 108 395
- US-A1- 2007 095 655

## Description

### Technical Field

The present invention relates to a membrane-electrode assembly, an electrolytic cell using the same, a method and an apparatus for producing ozone water, a method for disinfection and a method for wastewater or waste fluid treatment.

### Background Art

The electrolysis reaction has been industrially utilized for manufacture of chemical substances, such as chlorine and caustic soda, playing as a key role in modern industries. It also is applied for the waste water treatment for the purpose of electrolytic removal of harmful substances. The reaction vessels used for such processes, called electrolyzers or electrolytic cells, usually have a structure of casing which accommodates an anode and a cathodes or in addition to them a solid polymer electrolyte membrane positioned in-between Most of electrolytic cells have a structure that liquid or gas present on the anode side and the cathode side is physically separated. But, in some electrolytic processes, anolyte and catholyte are required or allowed to be mixed; and electrolytic cells for such processes will have a structure to meet the purpose.

The present invention, belonging to the latter case of the processes in which anolyte and catholyte are mixed and the ionization degree of raw material water is small, relates to a membrane-electrode assembly having a structure of a solid polymer electrolyte membrane interleaved between an anode and a cathode, and to an electrolytic cell applying the membrane-electrode assembly.

Relating to a membrane-electrode assembly, an electrolytic cell using the same, a method and an apparatus for producing ozone water, a method for disinfection and a method for wastewater or waste fluid treatment, the present invention can also provide possible solutions in various applications as well, other than ozone water production, including but not limited to organic electrolytic synthesis, decomposition of organic chlorine compounds containing dioxin, and producing drinking water out of river waters in time of disaster or in developing countries.

Recently, ozone water has been widely applied in medical and food hygienic areas, for semiconductor manufacturing system, etc. for its superior effects of disinfection and degradation activity of organic substances. The production methods are briefly classified into two groups: the gas phase production process by electric discharge in pure oxygen or oxygen-containing gas and the electrochemical process by water electrolysis.

Gas phase production process is superior in energy efficiency, and is used relatively for a large scale production system, running at a high voltage applying pure oxygen. In the gas phase production process, ozone water is obtained through contact with water in a gas liquid reactor.

On the other hand, the electrolysis production method is operated at a low voltage of several 10 volts or less by an electrolytic cell, applying water as raw material, from which ozone water is directory manufactured. This method provides high-concentrated ozone water relatively easily with a simple structural configuration of, basically, electrolytic cells and a power source, suitable for small- or middle-scale production capacity.

In the ozone water production electrolysis using pure water with a low ionization degree, installation of anode and cathode only in the water will not promote electrolysis reaction because of its low ionization degree. For this reason, a solid polymer electrolyte membrane is inserted between the cathode and the anode as a moving path for hydrogen ions, and thus, the electrolytic cell is configured by anode, cathode and solid polymer electrolyte membrane as functional elements.

Ozone is formed by the reaction formula, as below.

Ozone formation reaction (anode) : 3H₂O=O₃+6H⁺+6e⁻

E⁰=+1.51V

Oxygen formation reaction (anode) : 2H₂O=O₂+4H⁺+4e⁻

E⁰=+1.23V

Hydrogen formation reaction (cathode) : 2H⁺+2e⁻=H₂

In the above, the ozone formation reaction is a competitive reaction with the oxygen formation reaction, where oxygen with a lower generation electric potential forms presidentially and, therefore, the electric current efficiently of ozone formation is low.

Moreover, electrolysis is performed at a high potential using lead oxide anode or conductive diamond anode with a high overvoltage to suppress oxygen generation and therefore high electrolysis voltage is required during operation. As a result, the power efficiency, which is the product of current efficiency and voltage efficiency, of ozone water electrolysis is low and its improvement is desired.

Generally, in the conventional types of zone water production electrolysis, the anode side and the cathode side are physically separated by a solid polymer electrolyte membrane and electrolysis is conducted without mixing anolyte and catholyte.

In the electrolytic cell, for instance, anode and cathode are arranged structurally in parallel as shown in PTL 1, etc. and electrolyte passes in parallel with them. Such structure is similarly adopted in PTLs 2 and 3.
Thus, in the systems of conventional types, raw material water flows in parallel with the surfaces of cathode and anode, entering one end of the electrode and draining from the other end.

Therefore, the liquid composition varies with the progress of electrolysis reactions and unless sufficient flow rate is secured, reaction conditions can be different at the inlet and the outlet. This structural inconvenience is especially serious, causing a hydroxide precipitation problem in ozone water production applying non-purified waters, such as public tap water, well water and rain water, as raw material. In the conventional ozone water production applying such non-purified waters, the pH value of catholyte will increase with progress of electrolysis, causing a considerable amount of hydroxide of alkaline earth metals present in a trace amount in the raw material water to precipitate, over the cathode surface on the outlet side where reaction proceeds, to such a degree that electrolysis is hard to continue. To cope with this, operation must be stopped periodically for acid cleaning to remove the precipitate, as described in detail in PTL 4. This problem is commonly seen not only in electrolytic cells of an ordinary structure as shown in PTL 3, but also in those with a special structure as proposed in PTL 5.

In PTLs 6 and 7, the cathode compartment is separated and acid is applied as catholyte to reduce the precipitate, but the structure becomes complicated and additional care for safety operation is required. Whereas, in PTL 8, an alternative method is proposed to recover operation performance through reverse current by inverting the anode/cathode of the electrolytic cells, when the electrolysis properties have deteriorated. In this case, when reverse current is supplied, cathode temporarily works as anode and a trace of constituent metal element elutes. The eluted metal ions permeate into the solid polymer electrolyte membrane, causing its ion transport capacity to deteriorate considerably, and therefore, to prevent metal elements from eluting, it is required that the cathode is prepared with valve metals and an expensive noble metal coating is applied on its surface. In addition, anode which temporarily works as cathode may deteriorate as well.

As a design problem in the conventional electrolytic cells, raw material water enters through the inlet at one end of the electrolytic cell, flows on electrodes in parallel and drains from the outlet at the other end of the electrolytic cell, as shown in PTL 9. Such structural design gives no problem for a installed type system for which adequate installation space is provided, but when the system is to be equipped conveniently on the midway of an existing piping, as in the case of mounting on the tap water line in a house, the structure of such electrolytic cells may interfere with compact design concept.

PTL 10 discloses that in the ozone production system where water is supplied to the catalyst electrode comprising the cation exchange membrane supported by the anode and the cathode in-between, a through-hole communicating the anode electrode and the cathode electrode is provided on the cation exchange membrane at the part facing the raw material water supply route; and waters, such as tap water, from the raw material water supply route is supplied to either one of electrodes, anode or cathode, and then to the other electrode via the through-hole (Lines 22-32, Page 3, Patent Gazette of PTL 10). In PTL 10, a through-hole which communicates the anode compartment and the cathode compartment is provided, but no through-hole is provided in the members of the anode electrode, the cathode electrode and the ion exchange membrane, and therefore, raw material water does not flow through the same site in the anode electrode, in the cathode electrode, and in the ion exchange membrane. Consequently, the electrolysis efficiency is extremely low.

PTL 11 discloses an electrolytic ozone generation element by which moisture contained in air is electrolyzed to evolve ozone. In this element, a through-hole of 5 mm in diameter which penetrates the anode, solid polymer electrolyte membrane, and cathode at the center is provided. (Lines 11-13, Right column, Page 4, Lines 7-14, Right column, Page 7, and Fig. 10, Patent Gazette of PTL 11).

PTL 11, however, relates to the gas phase reaction which evolves ozone from moisture contained in feed air, and the through-hole is provided to circulate air as raw material, not liquid, thus having a different purpose from a through-hole to allow liquid to pass through. In Fig. 10 of PTL 11, such case as providing multiple holes in the anode is described, but through-holes corresponding to all of those in the anode are not provided in the solid polymer electrolyte membrane and the cathode, but only one through-hole 26 at the center; and if this element is used for liquid phase reaction, smooth flow of electrolyte cannot be maintained, not achieving efficient electrolysis.

Background art to the present invention comprises the following documents. EP 1 111 095 A1 relates to an ozone generating electrolysis cell and a method for fabricating the same. JP 2009-108395 A relates to an electrolytic cell for producing hydrogen peroxide using only water and oxygen-containing gas as raw materials. JP 2007-087888 A relates to a manufacturing method of a electrode-electrolyte membrane assembly with good power generation durability. US 2007/095655 A1 discloses an electrode assembly for the electrochemical treatment of liquids with a low conductivity.

In addition to the ozone water production area. the present invention can be applied in the following areas.

### 1. wastewater or waste fluid treatment

### 1) Electrolysis of Ammonia compounds

As a decomposition means of ammonia compounds contained in domestic wastewater, stockbreeding waste fluid, fisheries wastewater and certain industrial wastewater, electrolysis is known to be effective. For instance, NPL 1 discloses the process in which supporting electrolyte such as sodium chloride and sodium sulfate is added to promote electrolysis efficiently. However, by the use of a membrane-electrode assembly with solid polymer electrolyte membrane interleaved between the anode and cathode by the present invention, treatment becomes possible without adding those electrolytes, as a third component. Other structural features of the membrane-electrode assembly by the present invention are effective also in designing practical cells in these applications.

### 2) Treatment of wastewater containing organic substances

Multiple applications have been filed relating to an electrolysis treatment system for wastewater containing organic substances, but all of them apply electrolytic cell structure different from that by the present invention. For instance, PTL 12 proposes stack cells. The cells proposed assume that liquid flows in parallel with the electrode surface and therefore, they are low in reaction uniformity and hydrodynamic efficiency. In addition, the cells proposed, not applying the solid polymer electrolyte membrane, show difficulty in treating wastewater of a low conductivity. The method disclosed in PTL 13 applies mesh electrodes and proposes the structure in which the treatment liquid passes between the anode and the cathode, but as the liquid eventually flows out from the side of the cell, the macro flow runs similarly parallel with the electrode. It also has the same drawback caused from not having solid polymer electrolyte membrane as in the case above-mentioned.

Also, PTL 14 proposes a removal method by electrolysis for treating raw water containing hardly decomposable substances, such as aromatic compounds, PCBs, and dioxin. This method applies nickel ferrite electrode, recommending electrolysis operation at a current density as high as possible to obtain high decomposition efficiency. By using the membrane-electrode assembly by the present invention and such anode with, for instance, conductive diamond, a high current density is realized. Also, as solid polymer electrolyte membrane is being used, operation at a high current density becomes possible even when treatment liquids of low conductivity are treated. PTL 15, also, proposes an electrolytic removal method of organic chlorine compounds like dioxin. By using the membrane-electrode assembly by the present invention applying solid polymer electrolyte membrane, addition of electrolyte aqueous solution is eliminated, which contributes to reducing the production costs and lowering the environmental load.

### 2. Drinking water production system for use at disasters or in developing countries

Needs for supplying drinking water from rivers are high at disasters or in developing countries. For these purposes, technologies to secure safety of drinking water have been developed, for which patent applications have been filed. PTL 16 relates to the process in which salt is added to the liquid to be treated and disinfection is performed by electrolytically formed sodium hypochlorite. This method, however, bears such problems as: 1)the process is complicated being combined with the hybrid photocatalytic disinfection, 2)sodium hypochlorite remains in water for a relatively long time, and 3)decomposition effect of extremely harmful organic chlorine compounds like dioxin is hard to expect. (Remarks: As with the case of tap water for which certain time duration between treatment and drinking can be secured, remaining of sodium hypochlorite is not problematic, but for on-site type units for general purposes at emergency, drinking immediately after treatment must be assumed.) The injection method of sodium hypochlorite compounds functioned as disinfectant, as described typically by PTL 17, bears similar problems to the above and an addition of extra fear of harmful materials formed through chlorination of dissolved organic substances. Ozone decomposes rapidly after forming and its concentration lowers to a safe level at drinking.

### 3. Electrolytic synthesis

Electrolytic synthesis is often applied as a production process of specific chemical substances. In this process, acids or salts are added as supporting electrolyte when raw material water is low in ionization and conductivity. For instance, PTL 18 proposes to apply neutral halide as supporting electrolyte when hydroxypivalic acid ester is electrolytically synthesized from hydroxypivalaldehyde and alcohol. By this addition, electrolysis efficiency is reported to improve, but supporting electrolyte could remain in the product. Moreover, the process becomes complicated, resulting in a higher cost. If cells applying the membrane-electrode assembly by the present invention are used, addition of supporting electrolyte can be eliminated since the solid electrolyte is provided in contact with the anode and the cathode. Other structural features of the membrane-electrode assembly by the present invention are also effective for electrolytic synthesis of organic substances.

### Citation List

### Patent Literature

PTL 1: Patent A 1999-269686
PTL 2: Patent A 2005-336607
PTL 3: Patent A 1997-157900
PTL 4: Patent A 1998-130876
PTL 5: Patent A 2004-060010
PTL 6: Patent A 2002-173789
PTL 7: Patent A 2005-177671
PTL 8: Patent A 2008-150665
PTL 9: Patent A 2004-285374
PTL 10: Patent A 2008-279341
PTL 11: Patent A 1999-131276
PTL 12: Patent A 2006-281013
PTL 13: Patent A 2002-531704
PTL 14: Patent A 2003-126860
PTL 15: Patent A 2004-305290
PTL 16: Patent A 2010-064045
PTL 17: Patent A 2009-262079
PTL 18: Patent A 1994-73584

### Non Patent Literature

NPL 1: "Basic Study of Electrochemical Treatment of Ammonium Nitrogen-containing wastewater using Boron Doped Diamond Anode" SEI Technical Review, No. 65, October 2007, p. 71.

### Summary of Invention

### Technical Problem

The present invention aims to solve the problems of conventional methods and to provide a membrane-electrode assembly, an electrolytic cell using the same, a method and an apparatus for producing ozone water, a method for disinfection and a method for wastewater or waste fluid treatment, in which raw material water entered from the inlet port of the electrolytic cell reaches immediately the surfaces of both electrodes, where electrolytic reactions take place, without changing the flow direction; water containing ozone, is rapidly vented outside the electrolytic cell and thus ozone water can be produced at a high efficiency; a compact apparatus can be designed ,with minimizing pressure loss in the flow route, maintaining its production capacity; and high efficiency production is available at low cost.

### Solution to Problem

The membrane-electrode assembly of the present invention comprises an anode having a plurality of through-holes of 0.1 mm or more in diameter; a cathode having a plurality of through-holes of 0.1 mm or more in diameter at the same sites as in the anode; and a solid polymer electrolyte membrane coated on the entire surface of at least one of the anode and the cathode with the through-holes being maintained; wherein the anode, the solid polymer electrolyte membrane, and the cathode are tightly adhered.

In addition, the present invention provides the membrane-electrode assembly, wherein one face of the cathode with the through-holes is coated with the solid polymer electrolyte membrane, with the through-holes being maintained.

The present invention provides the membrane-electrode assembly, wherein the entire face of the cathode with the through-holes is coated with the solid polymer electrolyte membrane, with the through-holes being maintained.

In addition, the present invention provides the membrane-electrode assembly, wherein the solid polymer electrolyte membrane is formed on the entire surface of the anode with the through-holes or the cathode with the through-holes by applying and sintering a dispersion liquid of cation exchange resin, with the through-holes being maintained.

Further, the present invention provides the membrane-electrode assembly, wherein conductive diamond, lead dioxide, noble metals, and noble metal oxides are applied as anodic catalyst of the anode.

Furthermore, the present invention provides an electrolytic cell, wherein a current- carrying member is provided to the anode and the cathode of the membrane-electrode assembly.

Furthermore, the present invention provides the electrolytic cell, wherein a plurality of the membrane-electrode assemblies are piled to configure a stack structure and the current-carrying member Is provided to one each of the anode and the cathode.

Furthermore, the present invention provides the ozone water production apparatus, wherein a means to supply raw material water in right angle direction or oblique direction to the surfaces of the anode, the solid polymer electrolyte membrane, and the cathode, and a means to discharge is installed to one of the anode and the cathode constituting the electrolytic cell, the solid polymer electrolyte membrane and the cathode, and a means to discharge ozone water produced by the electrolytic cell, in right angle direction or oblique direction to the surfaces of the anode, the solid polymer electrolyte membrane, and the cathode is installed to the other of the anode and the cathode.

Furthermore, the present invention provides the ozone water production apparatus, wherein a means to supply raw material water in right angle direction or oblique direction to the surfaces of the anode, the solid polymer electrolyte membrane, and the cathode is installed to the anode constituting the electrolytic cell; a convection-inducing tube is installed to the cathode in right angle direction or oblique direction to the cathode; the electrolytic cell is placed in a water treatment tank; and the electrolytic cell is operated by natural convection associated with hydrogen, oxygen, and ozone gases evolved by the cathode and the anode.

Furthermore, the present invention provides the ozone water production apparatus, wherein the electrolytic cell is installed to a faucet of tap water or to a similar kind of discharge port of non-purified water.

Furthermore, the present invention provides the ozone water production method, wherein ozone water is produced by using the electrolytic cell, allowing raw material water to flow from either one of the anode and the cathode to pass through in right angle direction or oblique direction to the faces of the anode, the solid polymer electrolyte membrane and the cathode.

Furthermore, the present invention provides the ozone water production method, wherein ozone water is produced by using the electrolytic cell, allowing water containing a trace amount of alkaline metal ions or alkaline earth metal ions, as raw material water, to flow from the anode side to the cathode side to pass through in right angle direction or oblique direction to the faces of the anode, the solid polymer electrolyte membrane and the cathode, while precipitation of hydroxides on the cathode and the membrane being restricted.

Furthermore, the present invention provides a disinfection method, wherein water to be treated is disinfected with ozone water produced by the ozone water production method, as defined in claim 12.

Furthermore, the present invention provides a wastewater or waste fluid treatment method, wherein wastewater or waste fluid is treated with ozone water produced by the ozone water production method, as defined in claim 13.

Furthermore, the present invention provides the disinfection method, wherein fluid to be disinfected, as raw material water, is disinfected by using the electrolytic cell, allowing the fluid to be disinfected to pass through from one of the anode and the cathode in right angle direction or oblique direction to the faces of the anode, the solid polymer electrolyte membrane and the cathode.

Furthermore, the present invention provides the wastewater or waste fluid treatment method, wherein wastewater or waste fluid is treated by using the electrolytic cell, allowing the wastewater or waste fluid, as raw material water, to flow from one of the anode and the cathode to pass through in right angle direction or oblique direction to the faces of the anode, the solid polymer electrolyte membrane and the cathode.

In the present invention, ozone water is an electrolysis product containing ozone as a main element, obtained by electrolysis of pure water, tap water, etc., treatment water for disinfection, wastewater or waste fluid, etc. using the electrolytic cells by the present invention; wherein the ozone water can also be of water containing OH radicals, oxygen radicals, such as superoxide anion, hydrogen peroxide and other oxidants as well in addition to ozone gas.
As actions of ozone water, ozone gas itself becomes a main player of oxidation in low pH (acidic) environment, while in high pH (alkaline) environment, ozone gas decomposes and formed OH radical then dominates the oxidation action allowing the action further strong even if the total oxide equivalent is the same.

### Advantageous Effects of Invention

According to the membrane-electrode assembly of the present invention and electrolytic cells applying the same, the membrane-electrode assembly is constructed by a solid polymer electrolyte membrane coated on the entire face of at least one of the anode and the cathode with the through-holes, the through-holes being maintained; wherein the anode, the solid polymer electrolyte membrane and the cathode are tightly adhered and therefore, compared with the conventional cells, a compact apparatus can be designed and can be manufacture by a low cost. Furthermore, the electolysis voltage is low and ozone water can be produced at a high power efficiency so that a design of an electrolytic device, in which a storage battery or a solar battery is used as a power supply, becomes easy. Furthermore, in case water containing a trace amount of alkaline earth metal ions is used, a deposition to a cathode by hydroxide precipitation is restrained, an increase of electolysis voltage is smaller, a life of the device is remarkably prolonged, and the maintenance is minimized so that cost reduction is achieved while a power consumption is significantly reduced due to the restrained electolysis voltage increase.

Furthermore, in case water containing a trace amount of alkaline earth metal ions is used, a long life is achieved by a solid polymer electrolyte membrane coated on the entire face of the cathode rather than by a solid polymer electrolyte membrane coated on the entire face of the anode. Furthermore, even a longer life is achieved with a slower increase of electolysis voltage by coating the entire face of the cathode rather than by coating the one face of the cathode. The ozone water production method and ozone water production apparatus by the present invention bring:
1) Raw material water entering from the inlet port of the electrolytic cell reaches immediately both electrode surface of the anode and the cathode, which is the electrolysis reaction site, without changing the flow direction; then, after the electrolysis reaction products or the decomposition products are obtained, the raw material water is discharged outside the electrolytic cells through the holes of the solid polymer electrolyte membrane and the both electrode surface of the anode and the cathode in a short period of time and, therefore, according to the present invention, ozone water can be produced at a high efficiency.
2) In present invention, in case raw material water containing a trace amount of alkaline earth metal ions is used and the raw material water is supplied from the anode side to the electrolytic cell, the ozone water passing through the anode is at once into the cathode side, and thereafter is smoothly and swiftly discharged outside the electrolytic cells. Thus, obtained catholyte contains as-formed active ozone gas of high concentration, with electric potential kept relatively high which,
   in case water containing a trace amount of alkali metal ions or alkaline earth metal ions is used, can minimize hydroxide precipitation. Hydroxide precipitation is regarded as problematic in the ozone water production method applying such water as raw material.
3) Since the ozone water production apparatus of the present invention can be disposed in an extremely small width in longitudinal direction at the middle or the end of existing fluid piping, the channel pressure drop can be minimized allowing a compact and small equipment design. Moreover, the unit comprising anode, cathode, and solid polymer electrolyte membrane (membrane-electrode assembly) can be stacked in multiple number of units, as required, to constitute electrolytic cells. The availability of easy expansion of equipment capacity with the stack structure also allows a further compact design without sacrificing production capacity. This feature facilitates a commercial design of small-sized unit of the ozone water production apparatus in such a case as retro-fit installation to a public tap water line.
4) The ozone water production apparatus by the present invention is also suitable as a throw-in type unit, which is an easy-detachable and portable electrolytic cell equipped in a water-filled vessel. Water can be circulated by a pump combined with the unit; or water circulation can be realized by natural convection induced from rising ozone gas and oxygen and hydrogen gases formed together with ozone gas by electrolysis when utilizing a structurally simplified, practically effective throw-in type unit of such a configuration that the electrolytic cell is equipped with open inlet and outlet ports and a convection-inducing tube is installed on the outlet side of the unit, through which the raw material water flows in parallel with the gravity direction.
5) In addition, the ozone water production method and the ozone water production apparatus by the present invention can widen the range of practical use in various applications by being combined with existing technologies. One example is as follows. As ozone decomposes easily in water, its concentration sharply decreases with lapse of time; in order to prolong the service life of ozone water, a production system of nano-bubble ozone water is proposed. (Patent A 2005-246293) This type of the production system is realized by incorporating, for example, an ultrasonic generator as part of the ozone water production apparatus by the present invention. In this case, if cathode or anode is utilized as the ultrasonic transmission plate, the function can be added without sacrificing the size benefit of the apparatus.
6) As a means to obtain ozone water stably, dissolving carbon dioxide gas in raw material water or produced ozone water is proposed. (Patent A 2003-117570, etc.) Such system can be easily developed, if the ozone water production method and the ozone water production apparatus by the present invention are combined.

Moreover, according to the disinfection method and the wastewater or waste fluid treatment method by the present invention, ozone water which is reducing ozone concentration with a lapse of time is obtained at a high efficiency, and the membrane-electrode assembly by the present invention is easily constructed to a plurality of the stack structure and therefore a compact and high efficiency treatment device is realized. Furthermore, according to the disinfection method and the wastewater or waste fluid treatment method by the present invention, ozone water of high power efficiency can be produced by low electrolysis voltage and therefore the disinfection and the wastewater or waste fluid treatment is efficiency realized. In addition, the electrolytic cell by the present invention, featuring high power efficiency and small-size design, is best suited to a compact and portable apparatus for drinking water disinfection which is used in developing countries or disaster sites. According to the wastewater or waste fluid treatment method by the present invention, the treatment water is treated efficiently and uniformly, in addition to ordinary oxidation action by ozone water, by OH radicals having a strong oxidation action formed through contact of ozone water in anolyte with the cathode. Also, the membrane-electrode assembly by the present invention can be easily configured to multiple stacks, achieving a highly efficient treatment system. The cell configuration of this invention allows the electrolyte and the treatment water to pass through the boundary surface of the electrodes, the reaction site, and the solid electrolyte virtually simultaneously and evenly under the same conditions resulting in an even higher treatment efficiency being achieved.

### Brief Description of Drawings

[Fig.1] An embodiment of the membrane-electrode assembly 8' and the electrolytic cell 8 used in the present invention.
[Fig.2-1] A sectional view of an embodiment of the membrane-electrode assembly 8' used in the present invention.
[Fig.2-2] A sectional view on the cathode side of the membrane-electrode assembly 8' of Fig.2-1.
[Fig.3-1] A sectional view of another embodiment of membrane-electrode assembly 8' used in the present invention.
[Fig.3-2] A sectional view on the anode side of the membrane-electrode assembly 8' of Fig.3-1.
[Fig.4-1] A sectional view of yet another embodiment of membrane-electrode assembly 8' used in the present invention.
[Fig.4-2] A section view on the cathode side of the membrane-electrode assembly 8' of Fig.4-1.
[Fig.5-1] A section view of an embodiment of the ozone water production apparatus by the present invention.
[Fig.5-2] A schematic view of an embodiment of the ozone water production apparatus by the present invention.
[Fig.6] Another embodiment of the ozone water production apparatus by the present invention.
[Fig.7] Yet another embodiment of the ozone water production apparatus by the present invention.
[Fig.8] An embodiment of the ozone water production apparatus by the present invention used in Reference Example.
[Fig.9-1] The electrolytic cell 20' used in Comparative Example.
[Fig.9-2] A sectional view of the ozone water production apparatus used in Comparative Example.
[Fig.10] Change of electrolysis voltage with time in Examples 3, 4, Reference Example 2 and Comparative Example 2.
[Fig.11] Change of electrolysis voltage with time in Examples 5, 6, Reference Example 3 and Comparative Example 4.
[Fig.12] Difference in depigmentation effect between Example 7, Example 8 and Comparative Example 5.

### Description of Embodiments

The following explains the embodiment of the present invention based on the Figi.1, which shows the ozone water production method and an embodiment of the electrolytic cell by the present invention. The anode 1 has a plurality of through-holes 11 of Dia.0.1 mm or more, the cathode 2 has a plurality of through-holes 11 of Dia.0.1mm or more at the same sites as the anode 1, the solid polymer electrolyte membrane 3 comprises the cathode 2 with the through-holes 11 being coated and sintered on one face of the surfaces with a dispersion liquid of the cation exchange resin, and the membrane-electrode assembly 8' comprises the anode 1, the solid polymer electrolyte membrane 3 and the cathode 2, being tightly adhered with each other. The anode 1 is a structure in a specific shape with specific properties supported with anodic catalyst for ozone generation, with a current-carrying member 4 provided on the front face and the cathode 2 is a structure in a specific shape with specific properties supported with cathodic catalyst for hydrogen generation, with the current-carrying member 5 provided on the front face, constituting the electrolytic cell 8. Power cords 6 and 7 are connected to the current-carrying member 4 and 5, respectively. The more is the number of the through-holes 11, which should be at least two, the more is the exposed area of the interface between the anode and the solid polymer electrolyte membrane, which is the ozone evolving site, giving more preferable effect.
It is also preferable to obtain sufficient effect of the present invention that the size of the through-holes 11 should be 0.1 mm or more in diameter in order to avoid an increase in channel resistance and the number of the through holes should be as large as possible to secure smooth water flow. The desirable diameter of the through-holes 11 is in a range of 1-5mm.

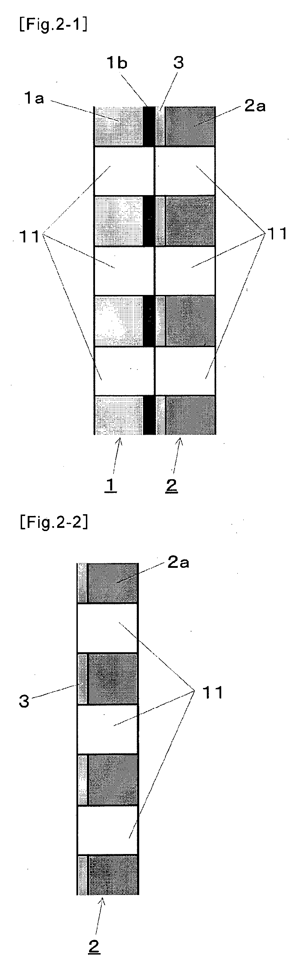

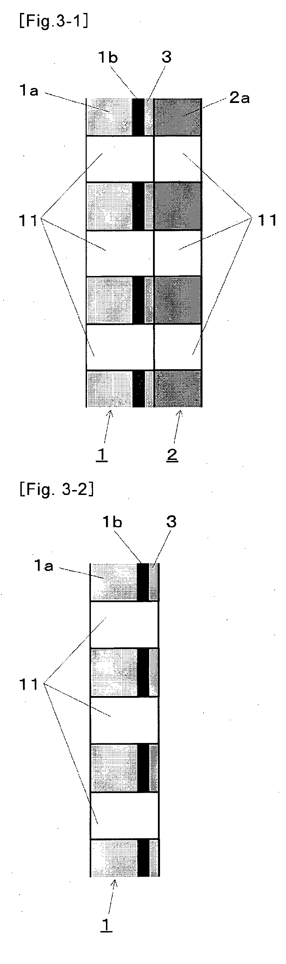

The solid polymer electrolyte membrane 3 is prepared by coating and sintering a dispersion liquid of cation exchange resin on one face or the entire face of at least one of the anode 1 and the cathode 2 with the through-holes 11. Figs.2-1 & 2-2, Figs.3-1 & 3-2, and Figs.4-1 & 4-2, respectively, show sectional views of electrodes on which the dispersion liquid of cation exchange resin is coated and sintered on one face of the cathode 1, one face of the anode 2, and the entire face of the cathode 1, along with the membrane-electrode assemblies constructed by applying those electrodes. Among these three embodiments, it is preferable to prepare the solid polymer electrolyte membrane 3 by coating and sintering the dispersion liquid of cation exchange resin on one face or the entire face of the cathode 1. As a reason, difference in property of electrolysis gases evolved at the respective electrodes is pointed. While evolved gases are required to diffuse outside the solid polymer electrolyte membrane 3 through the internal micro-pores, hydrogen gas evolved at the cathode is overwhelmingly small in molecular size and more easily diffuses than oxygen and ozone gases evolved at the anode. Therefore, when the solid polymer electrolyte membrane 3 is coated on the surface of the anode 1, as shown in Fig.3-1, 3-2, evolved oxygen and ozone gases lift the coated solid polymer electrolyte membrane 3, deteriorating the adherence between the solid polymer electrolyte and the electrode. This eventually keeps the effect achieved by the present invention from sufficient exhibition. 1 a represents the anode substrate, 1 b is the diamond coating, and 2a is the cathode substrate. The cathode substrate 2a typically employed by the present invention can work also as cathode catalyst.

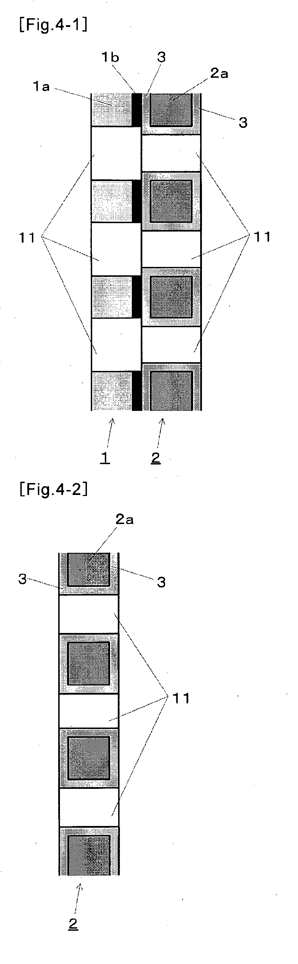

As shown in Fig.4-1 & 4-2, the solid polymer electrolyte membrane 3 is further preferably prepared by coating and sintering the dispersion liquid of cation exchange resin applied over the entire face of cathode of the membrane-electrode assembly 8'. Preparing the solid polymer electrolyte membrane 3 by coating and sintering the dispersion liquid of cation exchange resin applied over the entire face of cathode, rather than on one face of cathode, results in a restrained voltage rise, enhancing the service life eminently. By coating the cathode entirely with the solid polymer electrolyte membrane, hydroxide precipitation does not simply concentrate on the cathode face opposite to the anode, where electrolysis reaction takes place, but spreads over the entire cathode. Such phenomenon is clear from observation of the precipitate after electrolysis. Moreover, even if hydroxide precipitates, the hydrogen generation reaction at the cathode is considered hard to be interfered, since hydroxide precipitation does not directly cover the reactive metallic or ceramic faces, i.e., the catalytic surface of the cathode, due to the solid polymer electrolyte membrane intervening between the precipitate and the metal or ceramic faces of the cathode. More in detail, a trace amount of alkali ions, such as Na⁺ in raw material water is attracted to the cathode surface, where the cathode surface becomes alkaline by the cathode reaction: Na⁺+H₂O+e⁻→NaOH+(1/2)H₂, leaches away from the solid polymer electrolyte membrane surface, and diffuses into raw material water. At this time, a trace amount of alkaline earth metal ions with a larger ionic radius than Na+, such as Ca²⁺ becomes Ca(OH)₂ through alkaline precipitation near the solid polymer electrolyte membrane surface before reaching the cathode surface, since the transport number of Ca²⁺ is less than that of Na⁺. This phenomenon is confirmed from a naked eye or slight enlargement observation of the membrane-electrode assembly, which is; the precipitate appears not only on the part opposite to the anode, but also on the entire face of the cathode including its rear face when the entire face is coated with the solid polymer electrolyte membrane. Thus, the catalytic surface of the cathode will not be covered directly by the precipitation layer of Ca(OH)₂ and electrolysis continues. However, the discharge channel in the solid polymer electrolyte membrane for hydrogen molecules evolved on the cathode surface grows narrower over time and electolysis voltage will increase even if gradually.

In the afore-mentioned embodiment of the present invention, in order to prepare the solid polymer electrolyte membrane 3 with coating, with the through-holes 11 maintained, on one face or the entire face of at least one of the anode 1 and the cathode 2, the dispersion liquid of cation exchange resin is coated and sintered on one face or the entire face of, at least, one of the anode 1 and the cathode 2 both with the through-holes 11. As the dispersion liquid of cation exchange resin, such resins as having cation exchange groups: sulfonic acid group, carboxylic acid group, phosphonic acid group, phosphoric acid, etc. are among applicable candidates. Especially, dispersion liquid of perfluoro-sulphonic acid type cation exchange resin may be best suited for its possessing sulfonic acid group and chemical stability. Perfluoro-sulphonic acid type cation exchange resin does not completely dissolve in solvent and seems to aggregate as colloid with a relatively large size around 10nm in diameter in the solvent.
The formation process of the ion exchange membrane involves steps: coating dispersion liquid on the electrode substrate with a spray, roller, brush, sponge, etc.; and leaving it for a specified time at a room temperature for drying the solvent. The dispersion liquid is left to drop from a nozzle and tip, and the leveling can be left to spreading wetting of the dispersion liquid. Furthermore, the coated and dried dispersion liquid on the electrode substrate is heated to 120-350 degrees Celsius. Heating can also be practiced by using a dryer, muffle furnace, heating gun or on a hot plate. Applied heating temperature is selected not only for evaporating solvent, but also for sintering aggregated colloid, but excessive heating may alter polymer, and the preferable range should be 150∼250 degrees Celsius. During heating, micro gaps are considered to be formed. Reinforced coat can be obtained after the heat treatment, if a fluororesin mesh is placed on the electrode substrate beforehand, or cross linker of fluororesin or fluororesin filler is added in the dispersion liquid. Physical strength can also be enhanced by employing proton conductive materials.
Powder coating process is another method to prepare the solid polymer electrolyte membrane 3 with coating, with the through-holes 11 maintained, on one face or the entire face of, at least, one of the anode 1 and the cathode 2 both with the through-holes 11: the electrode surface is coated with ion exchange resin powder, followed by heating to form coating in semi-molten state.

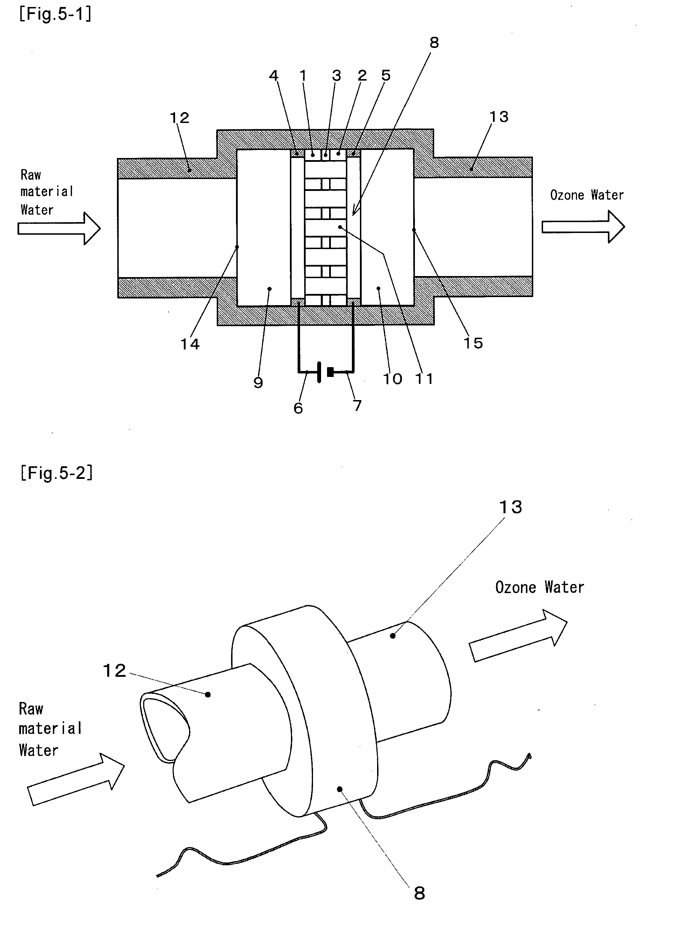

Fig.5-1 and Fig.5-2 show an embodiment of the ozone water production method and the ozone water production apparatus by the present invention, wherein a DC power supply for normal operation of electrolysis is connected to the electrolytic cell 8. The anode compartment 9 is provided in front of the anode 1; the cathode compartment 10 is provided in front of the cathode 2; the raw material water inlet pipe 12 supplies raw material water to the anode compartment 9 of the electrolytic cell 8; the ozone water outlet pipe 13 discharges electrolytically produced ozone water from the cathode compartment 10 of the electrolytic cell 8; the inlet port 14 supplies raw material water to the anode compartment 9 of the electrolytic cell 8; and the outlet port 15 discharges ozone water from the cathode compartment 10 of the electrolytic cell 8.

In Fig.5-1 and Fig.5-2, a plurality of through-holes 11 with 0.1 mm or more in diameter are provided on the anode 1 and the cathode 2 at the same sites to pass through, constituting the electrolytic cell 8; the solid polymer electrolyte membrane 3 is coated on one face of at least one of the anode 1 and the cathode 2 with both the through-holes 11 maintained; the inlet port 14 and the raw material water inlet pipe 12 are connected to the anode compartment 9 in right angle direction or oblique direction to the surfaces of the anode 1, the solid polymer electrolyte membrane 3 and the cathode 2; the outlet port 15 and the ozone water outlet pipe 13 are connected to the cathode compartment 10 in right angle direction or oblique direction. The solid polymer electrolyte membrane 3 can be provided, as afore-mentioned, on the front face, rear face, or entire face of through-holes of the cathode 2.
Moreover, as the electrolytic cell 8, the current-carrying member 4, 5 can be directly connected to the raw material water inlet pipe 12 and the ozone water outlet pipe 13, without providing the anode compartment 9, the cathode compartment 10, the inlet port 14 for raw material water and the outlet port 15 for ozone water discharge.
Furthermore, the electrolytic cell 8 can be installed not in right angle direction but oblique direction to the flow of raw material water. In case that the electrolytic cell 8 is installed in oblique direction, the electrolysis area becomes larger and ozone output can be increased.

As raw material water, pure water, tap water, or water containing a small amount of chlorine or sodium hypochlorite is applicable. It is recommendable that raw material water is introduced normally from the anode side and electrolytically produced ozone water is discharged from the cathode side. When pure water is applied as raw material water, it is also possible that pure water is introduced from the cathode side and electrolytically produced ozone water is discharged from the anode side.

For the electrolytic cell 8, it is possible to pile up a multiple number of the membrane-electrode assembly 8', configuring the electrolytic cell of a stack structure. If an element assembly of anode/solid polymer electrolyte membrane/cathode, as a unit, is double-decked to make-up an electrolytic cell similarly as afore-mentioned, improved ozone concentration and electric current efficiency are obtained. By configuring the membrane-electrode assembly 8' to a double-decked, required electrolysis voltage will be a little more than twice, but ozone concentration of obtained ozone water can be raised by 57-67%. Because the membrane-electrode assembly 8' is thin in structure, assemblies in several stacks can configure an electrolytic cell of almost the same dimension.

When water containing a trace amount of alkali metal ions or alkaline earth metal ions, e.g., tap water, is applied as the raw material water, it is necessary that the inlet port 14 for raw material water and the pipe 12 for raw material water supply are connected to the anode compartment 9 in right angle direction or oblique direction to the surfaces of the anode 1, the solid polymer electrolyte membrane 3 and the cathode 2 so that raw material water flows from the anode side to the cathode, and that the outlet port 15 for electrolytically produced ozone water and the pipe 13 for ozone water discharge are connected to the cathode compartment 10 in right angle direction or oblique direction so as to pass raw material water from the anode side to the cathode side. With this configuration, deposition of hydroxide precipitate on the cathode 2 and the solid polymer electrolyte membrane 3 can be restrained.

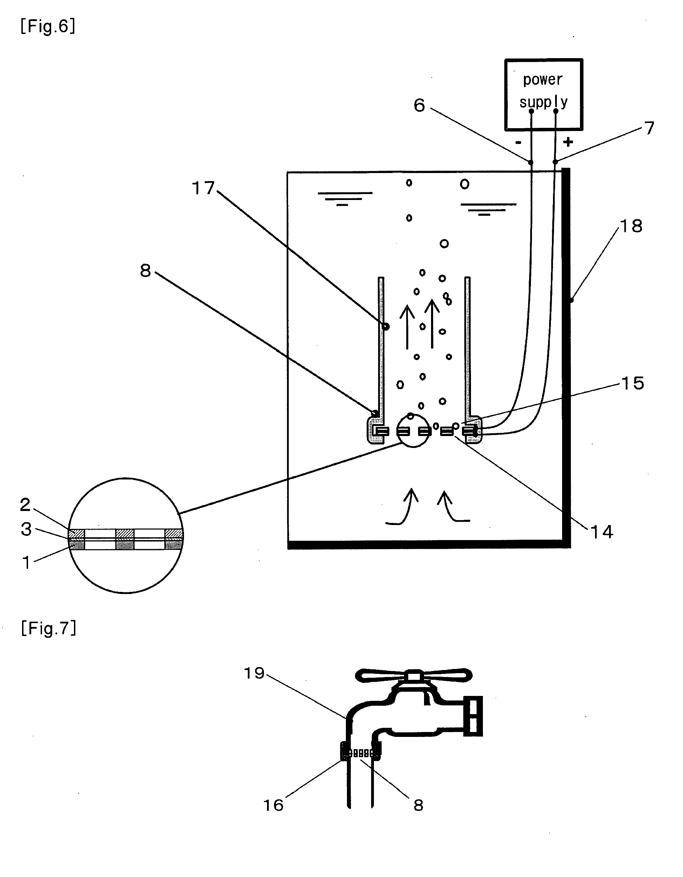

Fig.6 is yet another embodiment by the present invention. The power cords 6 and 7 are connected to the electrolytic cell 8; the convection-inducing tube 17 is provided to the outlet port 15 for electrolytically produced ozone water in right angle direction or oblique direction; and the electrolytic cell 8 is placed in the treatment tank 18. According to this apparatus, the electrolytic cell can be operated by natural convection associated with hydrogen, oxygen and ozone gases evolved from the cathode 2 and the anode 1, eliminating necessity for any power mechanism like an electric pump. Moreover, if built-in batteries are provided in the electrolytic cell 8 instead of the power cords 6 and 7, portability of the apparatus is further enhanced.

Fig.7 is yet another embodiment by the present invention, relating to the electrolytic cell 8 installed at a tap water faucet 19 or at a vent of non-purified water of the same kind. Ozone water is produced by passing raw material water through the electrolytic cell 8 by the present invention from either one of the anode compartment 9 and the cathode compartment 10 in right angle direction or oblique direction to the surfaces of the anode 1, the solid polymer electrolyte membrane 3 and the cathode 2. Since the electrolytic cell 8 by the present invention can be installed with an extremely small width in longitudinal direction in the middle or the end of a fluid piping, channel pressure drop is minimized and a compact system design is possible.

As anodic catalyst for the anode 1 used in the electrolytic cell 8, conductive diamond electrodes are recommended. The conductive diamond electrode offers superior application versatility; it generates ozone at a higher efficiency when compared with noble metal electrodes or noble metal oxide electrodes, and it maintains its electrochemical activity after being left idle during cease of operation without no environmental load unlike lead dioxide electrode. Diamond, of which electric conductivity can be controlled by doping, is regarded as a promising electrode material. Diamond electrodes have an extremely wide potential window and a high activation overvoltage to oxygen formation reaction, and are reported to generate ozone from oxidizing reaction, in addition to oxygen (Japanese Unexamined Patent Application Publication No.HEI 11-269686, Patent Gazette). If such metals or alloys thereof as tantalum, niobium, titanium, zirconium, and silicon, which form a stable passive film in the treatment water, are used as anode substrate, the anode is not required to be entirely covered with diamond catalyst. Even if some part of the substrate is exposed, it causes no significant impediment. A representative hot-filament CVD method is described as follows. Hydrocarbon gases such as methane CH₄ or organic substance such as alcohol are supplied as carbon sources together with hydrogen gas to the CVD chamber and the filament is heated, while reduction atmosphere is maintained to 1800-2400 degrees Celsius, the temperature range at which carbon radicals form. The electrode substrate, which is placed in the chamber, is disposed in the temperature range (750-950 degrees Celsius), at which diamond precipitates. The concentration of hydrocarbon gas to hydrogen is 0.1-10 vol.%, at a pressure of 20hPa-1013hPa (1 atmospheric pressure).

An addition of a trace amount of an element with a different valency is essential for diamond to gain desired conductivity. Preferable content of boron B or phosphorus P is 1-100000 ppm, and more preferably, 100-10000 ppm. As the raw material compound, trimethylboron (CH₃)₃B is applied, but less toxic boron trioxide B₂O₃, or diphosphorus pentoxide P₂O₅ is also applicable. As the electrode substrate of the present invention, such shapes as plate, particle, fiber, rod, and perforated plate can be used.

Since hydrogen evolution dominates the cathodic reactions of the cathode 2 used for the electrolytic cell 8, electrode catalyst, which may readily be free from hydrogen embrittlement, is preferably selected from such a group as platinum group metals, nickel, stainless steel, titanium, zirconium, molybdenum, tungsten, silicon, gold, silver, carbon, diamond and various metal carbides. As the cathode substrate of the cathode 2, applicable materials are limited to stainless steel, zirconium, carbon, nickel, titanium, molybdenum, tungsten, silicon and carbide thereof. Since the units by the present invention are disposed in contact with water containing oxidant like ozone, materials for electrode substrates should be among those with superior oxidation resistance. Electrode substrates made of stainless steel or nickel are also serviceable as electrode catalyst.

As anodic catalyst, an appropriate material is selected from among conductive diamond, amorphous carbon, graphite, lead dioxide, noble metals and noble metal oxides, in view of catalytic reaction, etc. By simply replacing electrodes, the membrane-electrode assembly by the present invention can be adjusted to various applications, such as organic electrolytic synthesis, decomposition of organic chlorine compounds including dioxin, waste fluid treatment, treatment of river water for drinking purpose in developing countries, and ozone water production.

In the disinfection method by the present invention, the following operation is also possible. Pure water, tap water, etc. are used as raw material water to produce ozone water by the electrolytic cell of the present invention and then, by using the produced ozone water, water to be treated is disinfected.

Further, as another disinfection method by the present invention, fluid for disinfection can be directly supplied, as electrolyte, to the electrolytic cell by the present invention for direct electrolysis, instead of pure water, tap water, etc. as raw material water.

Moreover, in the wastewater or waste fluid treatment method by the present invention, ozone water is produced by the electrolytic cell of the present invention applying pure water, tap water, etc. as raw material water and then, wastewater or waste fluid is treated with the produced ozone water.

Further, as yet another wastewater or waste fluid treatment method by the present invention, wastewater or waste fluid to be treated can be supplied, as electrolyte, to the electrolytic cell by the present invention for direct electrolysis, instead of pure water, tap water, etc. as raw material water.

### Examples

The following explains examples of the present invention, but the present invention shall not be limited to these examples.

### <Example 1, Example 2, Reference Example 1, Comparative Example 1>

### - Pure Water Electrolysis

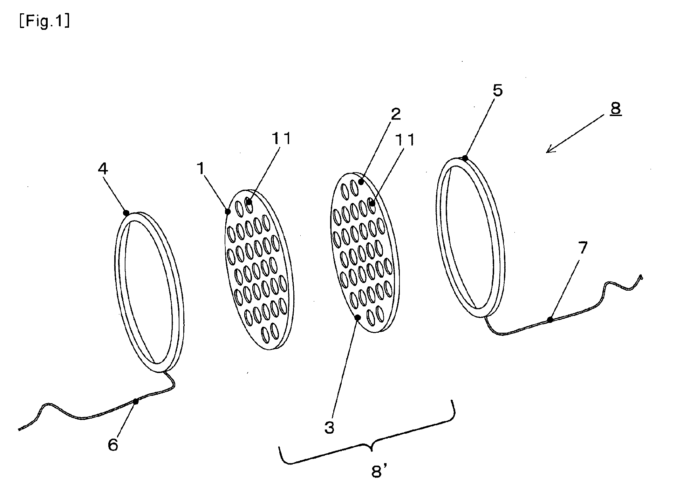

As Example 1, the electrolytic cell 8 shown in Fig.1, the membrane-electrode assembly shown in Fig.2-1 and Fig.2-2 and the ozone water production apparatus shown in Fig.5-1 and Fig.5-2 were built in the following manner.
The anode is prepared by applying boron doped diamond (BDD) coating at about 9.6g/m² weight per unit area on a niobium plate, Dia.25mm, 3mm thickness, as substrate, with 31 holes of Dia.3mm opened at the disposition shown in Fig.1; the cathode is prepared by a SUS304 plate processed in the same shape as the anode; and the membrane-electrode assembly is prepared by applying a 5% dispersion liquid of commercially available cation exchange resin (Trade Name: Nafion DE520, Trademark Registered by Du Pont) on one face of the cathode, sintering at 200 degree Celsius to form solid polymer electrolyte membrane, to which the anode is combined.
The element assembly comprising this structure was incorporated in a plastic resin casing to constitute an electrolytic cell, to which electric current was supplied via pure titanium-made current-carrying members provided at the both ends of the anode and the cathode. Degree of adhesion between the both electrodes and solid polymer electrolyte membrane affects ozone formation properties of the electrolysis apparatus, and therefore, M30 screw threaded at one end of the electrolytic cell was firmly tightened at 5Nm torque to secure a certain degree of pressure. The electrolytic cell thus constructed features that the size is compact, the internal flow path of fluid to be electrolyzed is straight, minimizing pressure loss, and the installation to the existing piping is easy.
As raw material water, pure water (DI water) maintained at 20 degrees Celsius was introduced to the electrolytic cell from the anode side at a constant water flow rate. Constant electric current was supplied using a DC constant-current power supply and voltage between electrodes (electolysis voltage) was monitored by a voltmeter. Table 1 shows the applied flow rates of raw material water and the current values. Ozone concentration of the ozone water produced by electrolysis was measured by sulfuric acid acidity, iodine-thiosulphate titration method based on "Measuring Methods of Ozone Concentration (issued March 1994)"- provisional standards by Japan Ozone Association - for the samples taken in a constant volume from the outlet water of the electrolytic cell after operation conditions had stabilized in 5-odd minutes from the start of electrolysis. The electrolysis test was conducted at an electric current of 1.67A, a water flow rate of 170ml/min. In Example 2, using the same electrolytic cell as Example 1, the electrolysis test was conducted at an electric current of 3.34A, at a water flow rate, of 320ml/min.
Ozone concentration in produced ozone water is a parameter that governs the effect of disinfection or cleaning as ozone water, and is required to be contained within a certain range depending on applications. If concentration in produced ozone water exceeds the level required by application, it can be easily adjusted, for instance, by increasing the water flow rate. Generally, as equipment capacity, a higher ozone concentration in produced ozone water is considered preferable.

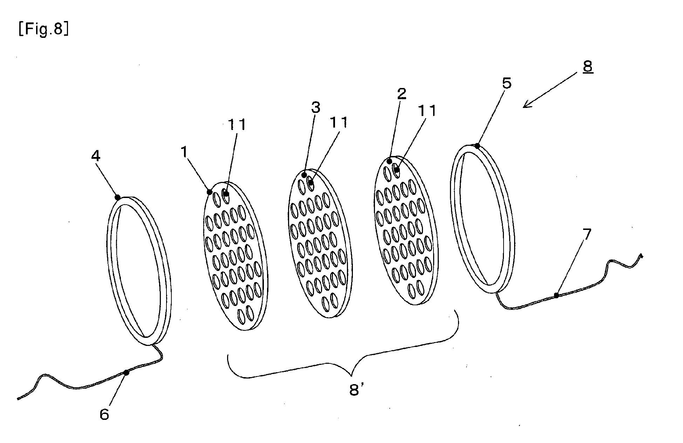

The electrolytic cell 8 shown in Fig.8, as Reference Example 1 was built in the following manner.

The anode 1 is prepared by applying boron doped diamond (BDD) coating at about 9.6g/m² weight per unit area on a niobium plate, Dia.25mm, 3mm thickness, as substrate, with 31 through-holes 11 of Dia.3mm; the cathode 2 is prepared by a SUS304 plate processed in the same shape as the anode 1 and polished on both surfaces with emery paper up to #1000; between the anode 1 and the cathode 2, a solid polymer electrolyte membrane made from a commercially available perfluorosulfonic acid type cation exchange membrane (Trade Name: Nafion 350, Trademark Registered by Du Pont) cut to Dia.25mm with 31 through-holes of Dia.3mm opened in the same way as the electrodes was inserted, preparing the membrane-electrode assembly 8'. The membrane-electrode assembly 8' was incorporated in a plastic resin casing, the pure titanium-made current-carrying members 4 and 5, and the power cords 6 and 7 are provided to the both ends of the anode 1 and the cathode 2, and electric current was supplied via the electrolytic cell 8. An ozone water production test with pure water was conducted similarly to Example 1.

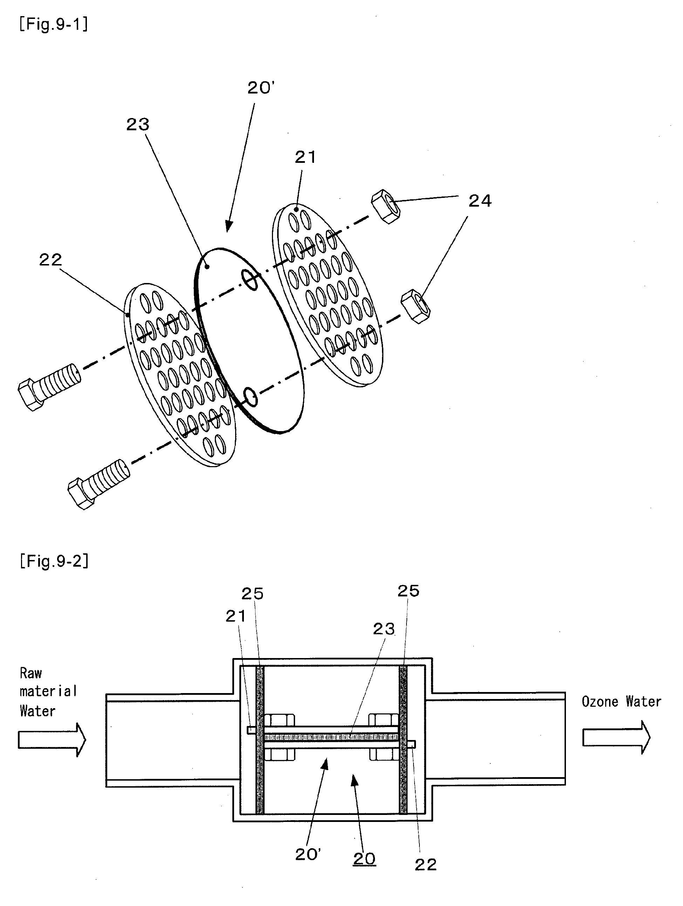

As Comparative Example 1, the membrane-electrode assembly 20' shown in Fig.9-1 and the ozone water production apparatus shown in Fig.9-2 were built in the following manner. Between the anode 21 and the cathode 22, for both of which the through-holes are provided as with Examples 1 and 2, the solid polymer electrolyte membrane 23 comprising a commercially available perfluorosulfonic acid type cation exchange membrane (Trade Name: Nafion 350, Trademark Registered by Du Pont) with no through-holes processed, was inserted. These three members were then fixed with plastic resin-made M2 screws 24 to constitute the membrane-electrode assembly 20', to which the current-carrying member 25 are connected to configure the electrolytic cell 20, which is consequently enlarged. Inside of the electrolytic cell 20, the membrane-electrode assembly 20' was disposed to configure an ozone water production apparatus in such a way that the raw material water flows in parallel with the electrode surface. Using this conventional ozone water production apparatus, an ozone formation test with pure water as raw material as with the Example 1 was conducted. The results of Examples 1 and 2, Reference Example 1, and Comparative Example 1 are tabulated in Table 1.

**Table 1**

| | Examle 1 | Examle 2 | Reference Example 1 | Cmprative Example 1 |
|---|---|---|---|---|
| Anode | BDD | BDD | BDD | BDD |
| cathode | SUS304 | SUS304 | SUS304 | SUS304 |
| solid polymer electrolyte membrane | Nafion * DE520 | Nafion * DE520 | Nafion * 350 | Nafion * 350 |
| | coating on one face of the cathode | coating on one face of the cathode | | |
| active area of electrode (cm²) | 4.91 | 4.91 | 4.91 | 4.91 |
| number of stack | 1 | 1 | 1 | 1 |
| raw material water | pure water | pure water | pure water | pure water |
| flow rate (ml/min) | 170 | 320 | 170 | 170 |
| a direction of water current | anode→ cathode | anode→ cathode | anode→ cathode | parallel with anode and cathode |
| electric current (A) | 1.67 | 3.34 | 1.67 | 1.67 |
| current density (A/cm²) | 0.34 | 0.68 | 0.34 | 0.38 |
| electolysis voltage (V) | 6.9 | 8.7 | 10.7 | 15.3 |
| ozone concentration (ppm) | 3.7 | 4.4 | 3.7 | 3.2 |
| current efficiency (%) | 7.5 | 8.5 | 7.5 | 6.6 |
| consumption electric power (W) | 11.5 | 29.1 | 17.9 | 25.6 |
| electric power efficiency (%)** | 1.6 | 1.5 | 1.1 | 0.7 |

| | | | | |
|---|---|---|---|---|
| Nation *: Registered Trademark by Du Pont electric power efficiency**:= current efficiency × theoretical electrolytic voltage(1.511 V)/measured electrolytic voltage | | | | |

As apparent from Table 1, it has become clear that compared with Reference Example 1 by the same electrolytic cell as the present invention except an existing cation exchange membrane applied as solid polymer electrolyte membrane and Comparative Example 1 by the electrolytic cell of conventional construction, the electrolytic cells by the present invention in Example 1 and Example 2 achieved significantly lower electolysis voltages, equivalent or a higher electric current efficiencies, and ozone concentrations in produced ozone water.

Generally, electrolytic performance of an ozone water production apparatus is evaluated from ozone concentration in the produced ozone water or electric current efficiency, but if viewed from alleviation of environmental load or designing battery driven, portable equipment, comparative evaluation based on consumed power efficiency, rather than electric current efficiency, may be more meaningful. For that purpose, Table 1 includes power efficiency as well. Table 1 clearly indicates that the power efficiency of the electrolytic cell by the present invention is remarkably high. As a side note, the reason for the relatively high power consumption of Example 2 is that the flow rate of water is 320ml/min., which is double the cases of Example 1, Comparative Example 1 and Reference Example 1 in order to produce twice the ozone water per unit time.

### <Example 3, Example 4, Reference Example 2, Comparative Example 2>

### - Tap Water Electrolysis

Example 3, Example 4, Reference Example 2 and Comparative Example 2 show the tests in which tap water is applied as raw material water instead of pure water. For Examples 3 and 4, the ozone water production apparatus was built in the following manner. The anode was prepared by processing a niobium plate as in the manner of Example 1 and Example 2 and by applying boron doped diamond (BDD) coating; the cathode was prepared by a SUS304 plate processed in the same shape as the anode. In Example 3, the membrane-electrode assembly was prepared by coating and sintering a 5% dispersion liquid of commercially available cation exchange resin (Trade Name: Nafion 520, Trademark Registered by Du Pont) on one face of the anode, at 200 degree Celsius to form solid polymer electrolyte membrane, to which the cathode was combined.

In Example 4, the cathode was similarly coated on one face with cation exchange resin as shown in Fig.2-1 and 2-2 and combined with the anode coated with boron doped diamond to constitute the membrane-electrode assembly with the same configuration as Example1 and Example 2. The membrane-electrode assembly was incorporated in a plastic resin casing to constitute an electrolytic cell as with Example 1 and Example 2, to which electric current was supplied via pure titanium-made current-carrying members provided at the both ends of the anode and the cathode. Public tap water was supplied, as raw material water, at a water flow rate of 170ml/min. The 200-hour continuous electrolysis tests were performed at an electrolysis current, 0.5A to study the degree of hydroxide precipitation from alkaline earth metal ions, such as Ca, contained in tap water in a trace amount. During the tests, the inter-electrode voltage, as electrolysis voltage, was monitored in every 5 minutes and automatically recorded.

Using the electrolytic cell with the same configuration as Reference Example 1 and applying tap water as raw material water, an ozone water production test was conducted as Reference Example 2 under the same electrolysis conditions as with Example 3 and Example 4.

Using the electrolytic cell with the same configuration as Comparative Example 1 and applying tap water as raw material water, an ozone water production test was conducted, as Comparative Example 2, under the same electrolysis conditions as with Example 3 and Example 4.

### <Comparative Example 3>

Public tap water is slightly conductive, since it contains a trace amount of alkali metal ions, alkaline earth metal ions, chlorine ions, carbonic acid ions, etc. In this connection, it was attempted to verify whether a similar effect to the present invention was obtained, without solid polymer electrolyte membrane provided between the anode and cathode, by installing, in a short distance as possible, the anode and the cathode provided with through-holes as described in Example 1. In Comparative Example 3, a polyethylene mesh: Dia.25mm, 0.75mm thick, Lw6.6mm, Sw4.4mm was disposed, instead of the solid polymer electrolyte membrane coating with through-holes as described in Examples 1 and Example 2, as a separator between the anode and the cathode for the tap water electrolysis test. The raw material tap water flew from the anode side to the cathode side via the through-holes provided in the both electrodes as with Example 3 and Example 4. In Comparative Example 3, where solid polymer electrolyte membrane is not applied, supplying the same electric current as Example 3 and Example 4 was not possible, since the electrolysis voltage would reach 30V, which is the maximum voltage available from the power source used for the experiment, and therefore, the electrolysis current was set at 0.1A.

As with other cases of tap water electrolysis described in the present specifications, electrolysis voltage increased with time, reaching 20V in around 140 hours. Electrolysis continued till the point at which it reached 30V, the upper limit of power source voltage, in a lapse of 330 hours. After the tests, the electrolysis cell was disassembled for examination, from which it was verified that hydroxide had precipitated by a similar degree to Reference Example 2, in spite that the applied electric current was one fifth. From this Example, it is apparent that ozone water production without using solid polymer electrolyte membrane is extremely inefficient.

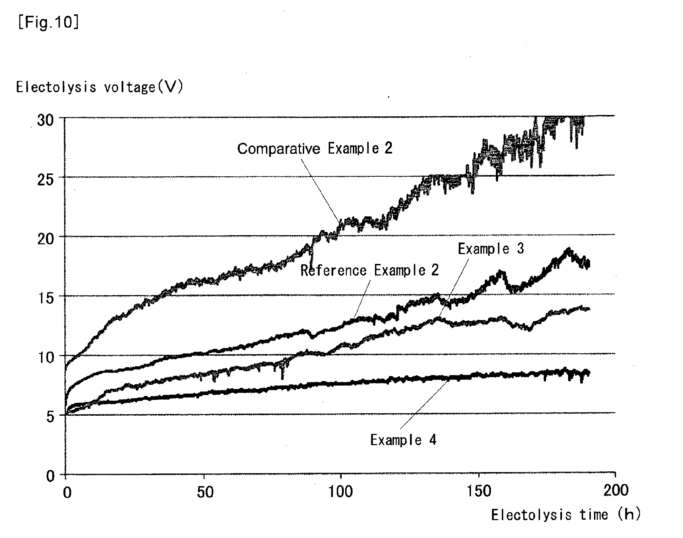

Table 2 gives the results of the tests from Example 3, Example 4, Reference Example 2, Comparative Example 2, and Comparative Example 3. Figure 10 gives the electolysis voltage change with time of Example 3, Example 4, Reference Example 2, and Comparative Example 2.

**Table 2**

| | Example 3 | Example 4 | Reference Example 2 | Cmprative Example 2 | Cmprative Example 3 |
|---|---|---|---|---|---|
| Anode | BDD | BDD | BDD | BDD | BDD |
| cathode | SUS304 | SUS304 | SUS304 | SUS304 | SUS304 |
| solid polymer electrolyte membrane | Nafion * DE520 | Nafion * DE520 | Nafion * 350 | Nafion * 350 | No |
| | coating on one face of the anode | coating on one face of the cathode | | | |
| active area of electrode (cm²) | 4.91 | 4.91 | 4.91 | 4.36 | 4.91 |
| a number of stack | 1 | 1 | 1 | 1 | 1 |
| raw material water | Tap water | Tap water | Tap water | Tap water | Tap water |
| flow rate (ml/min) | 170 | 170 | 170 | 170 | 170 |
| direction of water current | anode→ cathode | anode→ cathode | anode→ cathode | parallel with anode and cathode | anode→ cathode |
| electric current (A) | 0.50 | 0.50 | 0.50 | 0.50 | 0.50 |
| current efficiency (%) | 0.10 | 0.10 | 0.10 | 0.11 | 0.02 |
| electrolysis time (hr) | 200 | 200 | 200 | 200 | 330 |
| State of Hydroxide Precipitation | C | C | C | D | D |

| | | | | | |
|---|---|---|---|---|---|
| Nafion *: Registered Trademark by Du Pont < State of Hydroxide Precipitation > A: Thinly precipitated in some areas of the cathode hole inner surfaces and on the cathode surface B: Slightly but apparently precipitated in the cathode water-inducing holes and the cathode entire surface C: A certain amount of precipitation observed on the cathode entire surface but no clog in the cathode water-inducing holes D: Thickly precipitated on the cathode entire surface. | | | | | |

The electrolytic cells were disassembled after 200 hours of continuous operation and the state of hydroxide precipitation were visually examined. As known from Table 2, in Comparative Example 2, the entire surface of the cathode was thickly covered with precipitate, while Example 3, Example 4, and Reference Example 2 showed a similar degree of precipitation which was relatively mild.

On the other hand, the electrolysis voltage increased gradually with increase in hydroxide precipitation, but the degree of increase clearly differs from each other by the structure of the membrane-electrode assembly, as shown in Fig.10.

In Comparative Example 2, the electrolysis voltage reached 30V in 200 hours. In Example 4, Example 3, and Reference Example 2, the voltage elevation is slow in the order of listing, proving superiority of the present invention. In particular, Example 4 constituting the membrane-electrode assembly by coating solid polymer electrolyte on the cathode showed more stable electrolysis voltages and its elevation is much slower than Example 3 having the solid polymer electrolyte coating on the anode. Underlying difference is assumed to be related with the gas permeation properties of solid polymer electrolyte as coating material; gases permeate through intermolecular gaps of the solid polymer electrolyte or through numerous micro gaps formed in the membrane during the coating process from dispersion liquid. More in detail, hydrogen gas electrolytically evolved on the cathode is small in molecular size and can easily pass through and diffuse in the membrane; whereas, oxygen and ozone gases evolved on the anode are low in membrane permeability because of their large molecular sizes. On the anode side, evolved oxygen gas and ozone gas not dissolved in water lift the solid polymer electrolyte membrane and deteriorate tight adherence between the solid polymer electrolyte membrane and the electrode, which is a key property of the present invention, eventually allowing the membrane-electrode assembly to resemble the conventional structure where existing solid polymer electrolyte membrane is applied, and, as a result, the effect of the present invention will not be fully demonstrated. To the contrary, if adherence of the solid polymer electrolyte is not deteriorated by gasses, supply of water as raw material, being restricted by the solid polymer electrolyte membrane which covers the anode entirely, determines the rate of the electrolysis reaction. This can also lead to a high voltage. Generally, in a commercial water electrolysis operation, when electrolysis voltage has reached a certain pre-set level, the apparatus is cleaned with acid, etc., as maintenance work, to recover the function by removing deposit. If electrolysis voltage rises slowly, it is advantageous in view of reduced maintenance.

### <Example 5, Example 6, Reference Example 3, Comparative Example 4>

### - Tap Water Electrolysis

In an attempt to improve ozone water production efficiency, electrolysis operation at a high current density applying tap water as raw material was performed. A niobium plate for the anode and a SUS 304 plate for the cathode were processed as with Example 1 and Example 2 and the cathode was provided with a coating of solid polymer electrolyte applied in Examples 1, 2, and 4. Example 5 was an electrolysis test by the electrolytic cell with the same structure as Examples 1, 2, and 4, applying the membrane-electrode assembly with the cathode having solid polymer electrolyte coating on one face. Example 6 was an electrolysis test by the electrolytic cell applying the membrane-electrode assembly with the cathode having solid polymer electrolyte membrane coating applied on the entire exposed surface except the power supply part, that is, the opposite face to the anode, the rear face thereof, and wall faces of through-holes, as shown in Fig.4-1 and Fig.4-2. The applied electric current was 2.0A and the water flow rate was 170ml/min. Other electrolytic test procedures were the same as those of Example 3 and Example 4.

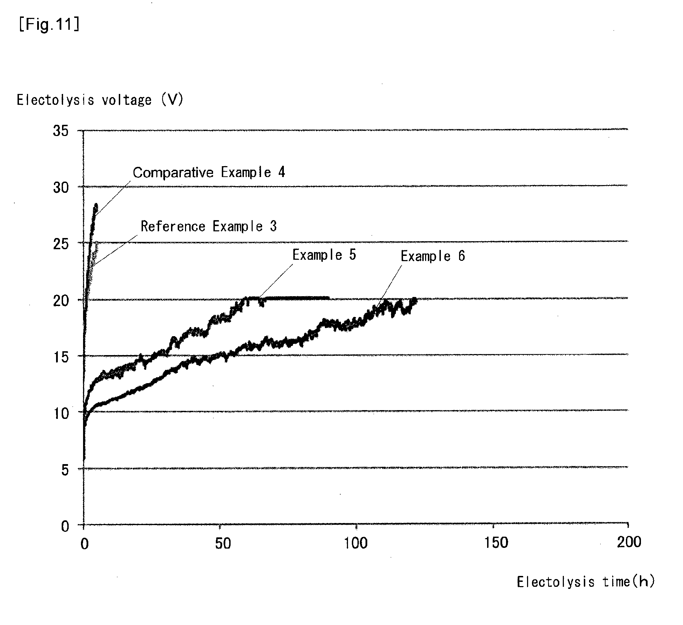

Reference Example 3 was an ozone water production test, with applying tap water as raw material, under the same electrolysis conditions as Example 5 and Example 6 using the electrolytic cell having the same structure as Reference Example 1. Also applying tap water as raw material water, Comparative Example 4 was an ozone water production test under the same conditions as Example 5 and Example 6 using the electrolytic cell having the same structure as Comparative Example 1. The ozone concentration after the start of electrolysis operation was measured by the method described in Example 1 and Example 2. In Example 5, Example 6, Reference Example 3, and Comparative Example 4, oxidizing substances, other than ozone, such as hypochlorite formed from a trace amount of chlorine ions contained in raw material water, are evolved; and therefore, the measured ozone concentration shows the total oxide equivalent of oxidizing substances including ozone and other oxidizing substances. Table 3 shows test results of Example 5, Example 6, Reference Example 3, and Comparative Example 4. Figure 11 gives the change of voltage with time.

**Table 3**

| | Example 5 | Example 6 | Reference Example 3 | Cmprative Example 4 |
|---|---|---|---|---|
| Anode | BDD | BDD | BDD | BDD |
| cathode | SUS304 | SUS304 | SUS304 | SUS304 |
| solid polymer electrolyte membrane | Nafion * DE520 | Nation * DE520 | Nafion * 350 | Nafion * 350 |
| | coating on one face of the anode | coating on one face of the anode | | |
| active area of electrode (cm²) | 4.91 | 4.91 | 4.91 | 4.36 |
| a number of stack | 1 | 1 | 1 | 1 |
| raw material water | Tap water | Tap water | Tap water | Tap water |
| flow rate (ml/min) | 170 | 170 | 170 | 170 |
| direction of water current | anode→ cathode | anode→ cathode | anode→ cathode | parallel with anode and cathode |
| electric current (A) | 2.0 | 2.0 | 2.0 | 2.0 |
| current efficiency (%) | 0.41 | 0.41 | 0.41 | 0.46 |
| electrolysis time (hr) | 59 | 122 | 5 | 5 |
| State of Hydroxide Precipitation | C | C | A | B |
| total oxide equivalent of oxidizing substances (ozone conversion)ppm | 6.5 | 6.7 | 6.6 | 6.3 |

| | | | | |
|---|---|---|---|---|
| Nafion *: Registered Trademark by Du Pont < State of Hydroxide Precipitation > A: Thinly precipitated in some areas of the cathode hole inner surfaces and on the cathode surface B: Slightly but apparently precipitated in the cathode water-inducing holes and the cathode entire surface C: A certain amount of precipitation observed on the cathode entire surface but no clog in the cathode water-inducing holes D: Thickly precipitated on the cathode entire surface. | | | | |

As apparent from Table 3 and Fig.11, the electrolysis voltage of Reference Example 3 and Comparative Example 4 increased at an early stage of the operation. Since the voltages of Comparative Example 4 first and then Reference Example 3 exceeded 20V, the electrolysis operation of these tests was stopped in five hours. In Example 5 and Example 6, the voltage increased slowly and reached 20V after 59 hours and 122 hours from the start, respectively, at which electrolysis operation was discontinued. These results indicate that those ozone water production apparatuses tested applying raw material water containing a trace amount of alkaline and alkaline earth ions, such as tap water, can be listed in an order of no-maintenance downtime duration as Example 6>Example 5> Reference Example3>Comparative Example 4. Namely, the electrolytic cell applying the membrane-electrode assembly by the present invention is remarkably superior to conventional electrolytic cells, and from comparisons among Examples by the present invention, it is known that an entire coating of the cathode with solid polymer electrolyte membrane provides further advantage. The total oxide equivalent of oxidizing substances converted for ozone concentration measured with Example 5 and Example 6 was in a range equal to Reference Example 3 and excelled Comparative Example 4

### <Example 7, Example 8, Comparative Example 5>

### -Wastewater Treatment(Verification of Depigmentation Effect)-

In Example 7, a wastewater treatment test was conducted, applying the membrane-electrode assembly with the cathode having a solid polymer electrolyte membrane coating on one face and using the electrolytic cell, as described in Example 5. Example 8 was a wastewater treatment test, applying the membrane-electrode assembly with the cathode having a solid polymer electrolyte membrane coating on the entire face thereof and the electrolytic cell, as described in Example 6.

The raw material water 500ml was poured into an Erlenmeyer flask with open top and kept at 20 degrees Celsius. The water was introduced to the electrolytic cell at 70ml/min., from the anode side to the cathode side, returning to the Erlenmeyer flask. Using a DC constant-current power supply, the electrolytic cell was charged at 2.0A

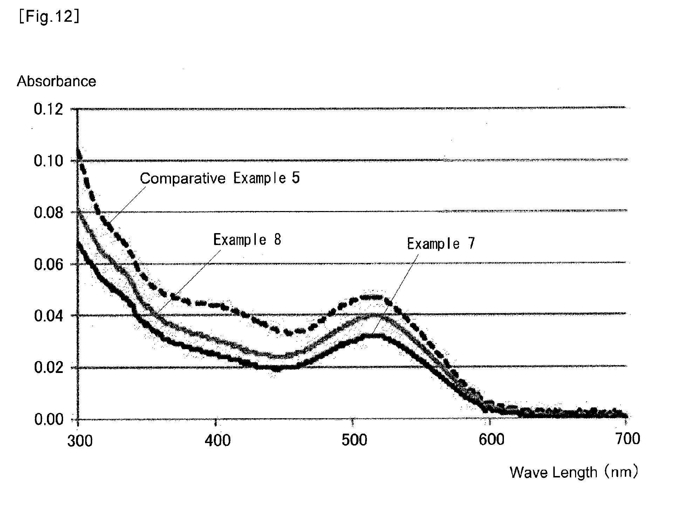

At 0.5, 1.0, and 1.5 hours after the start of electrolysis, a 5ml each of solution was sampled from the Erlenmeyer flask for photo-spectrum measurement by a UV -visible spectrophotometer (Model UV-2500 PC manufactured by Shimazu Corp.) in the wave range of 300-700nm. Fig.12 illustrates an absorption spectrum of amaranth after a lapse of 0.5 hours. The smaller is the absorbance, the smaller is the amaranth concentration.

Using the absorption spectrum around 521 nm wave length, a calibration curve was prepared based on the absorbance of the diluted original raw material water so as to determine the amaranth concentration for the development in 0.5 hour lapse. The measured amaranth concentrations were 8.0ppm by the membrane-electrode assembly in Example 7 in which a solid polymer electrolyte membrane had been coated on one face of the SUS 304 cathode, and 9.3ppm by the membrane-electrode assembly in Example 8 in which a solid polymer electrolyte membrane had been coated on the entire face of the cathode.

The amaranth concentrations by the membrane-electrode assembly in Example 7 and Example 8 decreased with time and in 1.5 hour lapse, the color almost faded and the concentrations were reduced to 0.3ppm in both cases. From the analysis of decomposition products, it was confirmed that low-molecular weight compounds of amaranth decomposition products, such as CO₃²⁻ and oxalic acid had been formed.

Comparative Example 5 was conducted with the raw material water, the electrolysis method, and the measuring method as described in Example 7 and Example 8 using the same membrane-electrode assembly and the electrolytic cell as described in Comparative Example 1. Fig.12 illustrates an absorption spectrum of amaranth after a lapse of 0.5 hours. The smaller is the absorbance, the smaller is the amaranth concentration.

The amaranth concentration was determined for the development in 0.5 hour lapse. The resulting concentration was 10.9ppm.

The amaranth concentration decreased with time and in 1.5 hour lapse, the color almost faded and the concentration was reduced to 0.3ppm. From the analysis of decomposition products, it was confirmed that low-molecular weight compounds of amaranth decomposition products, such as CO₃⁻ and oxalic acid had been formed.

From the test results illustrated in Fig. 12, it is apparent that the reduction rate of the amaranth concentration in Example 7 and Example 8 is larger than Comparative Example 5. Meanwhile, as the reason why the reduction rate of the amaranth concentration in Example 8 is a little smaller than that in Example 7, it is inferred that in Example 8, the solid polymer electrolyte membrane covering the entire surface of the cathode restricts the formation of OH free radicals having a strong oxidation action, which should have been formed through contact of ozone with cathode catalyst.

### Industrial Applicability

According to the membrane-electrode assembly of the present invention, the membrane-electrode assembly is constructed by a solid polymer electrolyte membrane coated on the entire surface of at least one of the anode and the cathode with the through-holes being maintained, and the solid polymer electrolyte membrane is formed by applying and sintering a dispersion liquid of cation exchange resin on the entire surface of at least one of the anode and the cathode and, therefore, compared with the conventional cells, a compact apparatus can be designed and can be manufacture by a low cost. Furthermore, the electolysis voltage is low and ozone water can be produced at a high power efficiency.

Since the ozone water production apparatus by the present invention can be disposed in an extremely small width in longitudinal direction at the middle of fluid piping being available, the channel pressure drop can be minimized, which enables a compact and small equipment design. Moreover, the unit comprising anode, cathode, and solid polymer electrolyte membrane can be stacked, as required, to construct electrolytic cells. The availability of easy expansion of equipment capacity achieves a further compact design without sacrificing production capacity. This feature facilitates a commercial design of small-size unit of the ozone water production apparatus, assuming retro-fit installation to a public tap water line. Moreover, the ozone water production apparatus by the present invention is also suitable as a throw-in type unit, which is an easy-detachable and portable electrolytic cell equipped in a water-filled vessel. Furthermore, water can be circulated by a pump combined with the unit; or as a structurally simplified, practically effective throw-in type unit, such configuration is recommended that the electrolytic cell, with open inlet and outlet ports, is installed in such a manner that the raw material water flows in parallel with the gravity direction and a convection-inducing tube is installed on the outlet side of the unit in order to utilize natural convection from rising ozone gas and oxygen and hydrogen gases formed together with ozone gas by electrolysis. In addition, the ozone water production method and the ozone water production apparatus by the present invention can widen the practicable range in various applications by being combined with existing technologies. One example is as follows. As ozone decomposes easily in water, the concentration of it sharply decreases with lapse of time; in order to prolong the service life of ozone water, a production system of nano-bubble ozone water is proposed. This type of the production system is realized by incorporating, for example, an ultrasonic generator as part of the ozone water production apparatus by the present invention. In this case, if cathode or anode is utilized as the ultrasonic transmission plate, the function can be added without sacrificing the size of the apparatus. As a means to obtain ozone water stably, dissolving carbon dioxide gas in raw material water or produced ozone water is proposed. Such system can be easily developed, if the ozone water production method and the ozone water production apparatus by the present invention are combined.

In addition, the present invention can be well utilized for various applications, such as organic electrolytic synthesis, decomposition of organic chlorine compounds containing dioxin, waste fluid treatment, treatment of river water for drinking in developing countries, and ozone water production.

### Reference Signs List

- 1:: anode
- 1 a:: anode substrate
- 1 b:: diamond coating
- 2:: cathode
- 2a:: cathode substrate
- 3:: solid polymer electrolyte membrane
- 4, 5:: current-carrying member
- 6, 7:: power cord
- 8:: electrolytic cell
- 8':: membrane-electrode assembly
- 9:: anode compartment
- 10:: cathode compartment
- 11:: through-holes
- 12:: raw material water inlet pipe
- 13:: ozone water outlet pipe
- 14:: inlet port
- 15:: outlet port
- 16:: area limiting ring
- 17:: convection-inducing tube
- 18:: treatment tank
- 19:: tap water faucet
- 20:: electrolytic cell
- 20':: membrane-electrode assembly
- 21:: anode
- 22:: cathode
- 23:: solid polymer electrolyte membrane
- 24:: screw
- 25:: current-carrying member

## Claims

1. A membrane-electrode assembly, comprising:
an anode having a plurality of through-holes of 0.1 mm or more in diameter;
a cathode having a plurality of through-holes of 0.1 mm or more in diameter at the same sites as in the anode; and
a solid polymer electrolyte membrane coated on the entire surface of at least one of the anode and the cathode with the through-holes being maintained;
wherein the anode, the solid polymer electrolyte membrane and the cathode are tightly adhered.

2. The membrane-electrode assembly according to claim 1, wherein the entire surface of the cathode with the through-holes is coated with the solid polymer electrolyte membrane, with the through-holes being maintained.

3. The membrane-electrode assembly according to one of claims 1 or 2, wherein the solid polymer electrolyte membrane is formed on the entire surface of the anode with the through-holes or the cathode with the through-holes by applying and
sintering a dispersion liquid of cation exchange resin, with the through-holes being maintained.

4. The membrane-electrode assembly according to one of claims 1-3 wherein conductive diamond, lead dioxide, noble metals and noble metal oxides are applied as anodic catalyst of the anode.

5. An electrolytic cell comprising the membrane-electrode assembly according to one of claims 1-4 wherein a current-carrying member is provided to the anode and the cathode of the membrane-electrode assembly.

6. The electrolytic cell according to claim 5, wherein a plurality of the membrane-electrode assemblies according to one of claims 1-4 are piled to configure a stack structure and the current-carrying member is provided to one each of the anode and the cathode.

7. An ozone water production apparatus, wherein a means to supply raw material water in right angle direction or oblique direction to the surfaces of the anode, the solid polymer electrolyte membrane and the cathode is installed to one of the anode and the cathode constituting the electrolytic cell according to claim 5 or 6,
and a means to discharge ozone water produced by the electrolytic cell in right angle direction or oblique direction to the surfaces of the anode, the solid polymer electrolyte membrane and the cathode is installed to the other of the anode and the cathode.

8. The ozone water production apparatus according to claim 7, wherein a means to supply raw material water in right angle direction or oblique direction to the surfaces of the anode, the solid polymer electrolyte membrane and the cathode is installed to the anode constituting the electrolytic cell according to claim 5 or 6; a convection-inducing tube is installed to the cathode in right angle direction or oblique direction to the cathode; the electrolytic cell is placed in a water treatment tank; and the electrolytic cell is operated by natural convection associated with hydrogen, oxygen, and ozone gases evolved by the cathode and the anode.

9. The ozone water production apparatus according to claim 7 or 8, wherein the electrolytic cell according to claim 5 or 6 is installed to a faucet of tap water or to a similar kind of discharge port of non-purified water.

10. An ozone water production method, wherein ozone water is produced by using the electrolytic cell according to claim 5 or 6, allowing raw material water to flow from either one of the anode and the cathode to pass through in right angle direction or oblique direction to the faces of the anode, the solid polymer electrolyte membrane and the cathode.

11. The ozone water production method according to claim 10, wherein ozone water is produced by using the electrolytic cell according to claim 5 or 6, allowing water containing a trace amount of alkaline metal ions or alkaline earth metal ions, as raw material water, to flow from the anode side to the cathode side to pass through in right angle direction or oblique direction to the faces of the anode, the solid polymer electrolyte membrane and the cathode, while precipitation of hydroxides on the cathode and the membrane being restricted.

12. A disinfection method comprising producing ozone water according to the method of claim 10 or 11, and disinfecting water to be treated with said ozone water.

13. A wastewater or waste fluid treatment method comprising producing ozone water according to the method of claim 10 or 11, and treating wastewater or waste fluid with said ozone water.

14. The disinfection method according to claim 12, wherein fluid to be disinfected, as raw material water, is disinfected by using the electrolytic cell according to claim 5 or 6, allowing the fluid to be disinfected to flow from one of the anode and the cathode to pass through in right angle direction or oblique direction to the faces of the anode, the solid polymer electrolyte membrane and the cathode.

15. The wastewater or waste fluid treatment method according to claim 13, wherein
wastewater or waste fluid is treated by using the electrolytic cell according to claim 5 or 6, allowing the wastewater or waste fluid, as raw material water, to flow from one of the anode and the cathode to pass through in right angle direction or oblique direction to the faces of the anode, the solid polymer electrolyte membrane and the cathode.

## Patentansprüche

1. Membran-Elektroden-Baugruppe, umfassend:
eine Anode mit einer Vielzahl von Durchgangsbohrungen mit einem Durchmesser von 0,1 mm oder mehr;
eine Kathode mit einer Vielzahl von Durchgangsbohrungen mit einem Durchmesser von 0,1 mm oder mehr auf der gleichen Seite wie in der Anode; und
eine feste Polymerelektrolyt-Membran, mit der die gesamte Oberfläche von wenigstens einer, der Anode oder der Kathode beschichtet ist, wobei die Durchgangsbohrungen erhalten bleiben;
wobei die Anode, die feste Polymerelektrolyt-Membran und die Kathode fest aneinander haften.

2. Membran-Elektroden-Baugruppe nach Anspruch 1, wobei die gesamte Oberfläche der Kathode mit den Durchgangsbohrungen mit der festen Polymerelektrolyt-Membran beschichtet ist, wobei die Durchgangsbohrungen erhalten bleiben.

3. Membran-Elektroden-Baugruppe nach einem der Ansprüche 1 oder 2, wobei die feste Polymerelektroyt-Membran auf der gesamten Oberfläche der Anode mit den Durchgangsbohrungen oder der Kathode mit den Durchgangsbohrungen ausgebildet wird, indem eine Dispersionsflüssigkeit eines Kationenaustausch-Harzes aufgebracht und geschmolzen wird, wobei die Durchgangsbohrungen erhalten bleiben.

4. Membran-Elektroden-Baugruppe nach einem der Ansprüche 1-3, wobei leitfähiger Diamant, Bleidioxid, Edelmetalle und Edelmetall-Oxide als Anoden-Katalysator der Anode verwendet werden.

5. Elektrolysezelle, umfassend die Membran-Elektroden-Baugruppe nach einem der Ansprüche 1-4, wobei ein stromführendes Element an der Anode und der Kathode der Membran-Elektroden-Baugruppe bereitgestellt wird.

6. Elektrolysezelle nach Anspruch 5, wobei eine Vielzahl von Membran-Elektroden-Baugruppen nach einem der Ansprüche 1-4 geschichtet werden, um eine Stapelstruktur zu formen und das stromführende Element jeweils an der Anode und der Kathode bereitgestellt wird.

7. Vorrichtung zur Bildung von Ozonwasser, wobei ein Mittel zum Zuleiten von Rohwasser in Richtung eines rechten Winkels oder in schräger Richtung zu den Oberflächen der Anode, der festen Polymerelektrolyt-Membran und der Kathode an einer, der Anode oder der Kathode, die die Elektrolysezelle nach Anspruch 5 oder 6 bilden, angebracht ist, und ein Mittel zum Ableiten von von der Elektrolysezelle gebildetem Ozonwasser in Richtung eines rechten Winkels oder in schräger Richtung zu den Oberflächen der Anode, der festen Polymerelektrolyt-Membran und der Kathode an der anderen, der Anode oder der Kathode, angebracht ist.

8. Vorrichtung zur Bildung von Ozonwasser nach Anspruch 7, wobei ein Mittel zum Zuleiten von Rohwasser in Richtung eines rechten Winkels oder in schräger Richtung zu den Oberflächen der Anode, der festen Polymerelektrolyt-Membran und der Kathode an der Anode, die die Elektrolysezelle nach Anspruch 5 oder 6 bildet, angebracht ist, ein Konvektion induzierendes Rohr an der Kathode in Richtung eines rechten Winkels oder in schräger Richtung zu der Kathode angebracht ist; die Elektrolysezelle in einen Behälter zur Flüssigkeitsaufbereitung eingesetzt wird; und die Elektrolysezelle durch eine natürliche Konvektion, die mit Wasserstoff, Sauerstoff und durch die Kathode und die Anode entstehenden Ozongasen in Zusammenhang steht, betrieben wird.

9. Vorrichtung zur Bildung von Ozonwasser nach Anspruch 7 oder 8, wobei die Elektrolysezelle nach Anspruch 5 oder 6 an einem Wasserhahn von Leitungswasser oder einem Auslaufstutzen gleicher Art von nicht-gereinigtem Wasser angebracht ist.

10. Verfahren zur Bildung von Ozonwasser, wobei das Ozonwasser durch Verwenden der Elektrolysezelle nach Anspruch 5 oder 6 gebildet wird, indem ermöglicht wird, dass Rohwasser von entweder der Anode oder der Kathode strömt, um in Richtung eines rechten Winkels oder in schräger Richtung zu den Oberflächen der Anode, der festen Polymerelektrolyt-Membran und der Kathode durchgeleitet zu werden.

11. Verfahren zur Bildung von Ozonwasser nach Anspruch 10, wobei das Ozonwasser durch Verwenden der Elektrolysezelle nach Anspruch 5 oder 6 gebildet wird, indem ermöglicht wird, dass Wasser, das eine Spurenkonzentration von Alkalimetallionen oder Erdalkalimetallionen enthält, als Rohwasser von der Anodenseite zu der Kathodenseite strömt, um in Richtung eines rechten Winkels oder in schräger Richtung zu den Oberflächen der Anode, der festen Polymerelektrolyt-Membran und der Kathode durchgeleitet zu werden, während die Ablagerung von Hydroxid-Präzipitat an der Kathode und der Membran eingeschränkt wird.

12. Verfahren zur Desinfektion, umfassend die Bildung von Ozonwasser gemäß dem Verfahren des Anspruchs 10 oder 11, und Desinfizieren von Wasser, das mit dem Ozonwasser behandelt werden soll.

13. Verfahren zur Aufbereitung von Abwasser oder Abfallflüssigkeit, umfassend das Bilden von Ozonwasser gemäß dem Verfahren des Anspruchs 10 oder 11, und Aufbereiten des Abwassers oder der Abfallflüssigkeit mit dem Ozonwasser.

14. Verfahren zu Desinfektion nach Anspruch 12, wobei die zu desinfizierende Flüssigkeit als Rohwasser unter Verwenden der Elektrolysezelle nach Anspruch 5 oder 6 desinfiziert wird, indem ermöglicht wird, dass die zu desinfizierende Flüssigkeit von einer, der Anode oder der Kathode strömt, um in Richtung eines rechten Winkels oder in schräger Richtung zu den Oberflächen der Anode, der festen Polymerelektrolyt-Membran und der Kathode durchgeleitet zu werden.

15. Verfahren zur Aufbereitung von Abwasser oder Abfallflüssigkeit nach Anspruch 13, wobei das Abwasser oder die Abfallflüssigkeit unter Verwenden der Elektrolysezelle nach Anspruch 5 oder 6 aufbereitet wird, indem ermöglicht wird, dass das Abwasser oder die Abfallflüssigkeit als Rohwasser von einer, der Anode oder der Kathode strömt, um in Richtung eines rechten Winkels oder in schräger Richtung zu den Oberflächen der Anode, der festen Polymerelektrolyt-Membran und der Kathode durchgeleitet zu werden.

## Revendications

1. Assemblage de membrane-électrodes comprenant :
une anode comportant une pluralité de trous traversants présentant un diamètre de 0,1 mm ou plus ;
une cathode comportant une pluralité de trous traversants présentant un diamètre de 0,1 mm ou plus au niveau des mêmes sites que sur l'anode ; et
une membrane d'électrolyte polymère solide déposée sous forme de revêtement sur toute la surface d'au moins l'une parmi l'anode et la cathode, les trous traversants étant conservés ;
dans lequel l'anode, la membrane d'électrolyte polymère solide et la cathode adhèrent étroitement.

2. Assemblage de membrane-électrodes selon la revendication 1, dans lequel toute la surface de la cathode avec les trous traversants est revêtue de la membrane d'électrolyte polymère solide, les trous traversants étant conservés.

3. Assemblage de membrane-électrodes selon l'une des revendications 1 et 2, dans lequel la membrane d'électrolyte polymère solide est formée sur toute la surface de l'anode avec les trous traversants ou de la cathode avec les trous traversants par application et frittage d'un liquide en dispersion de résine échangeuse de cations, les trous traversants étant conservés.

4. Assemblage de membrane-électrodes selon l'une des revendications 1 à 3, dans lequel du diamant conducteur, du dioxyde de plomb, des métaux nobles et des oxydes de métaux nobles sont appliqués à titre de catalyseur anodique de l'anode.

5. Cellule électrolytique comprenant l'assemblage de membrane-électrodes selon l'une des revendications 1 à 4, dans laquelle un élément de transport de courant est fourni à l'anode et à la cathode de l'assemblage de membrane-électrodes.

6. Cellule électrolytique selon la revendication 5, dans laquelle une pluralité des assemblages de membrane-électrodes selon l'une des revendications 1 à 4 sont empilés pour que soit configurée une structure d'empilement, et l'élément de transport de courant est fourni à chaque anode et chaque cathode.

7. Dispositif de production d'eau ozonisée, dans lequel un moyen pour fournir de l'eau matière première dans une direction à angle droit ou une direction oblique par rapport aux surfaces de l'anode, de la membrane d'électrolyte polymère solide et de la cathode est disposé au niveau de l'une parmi l'anode et la cathode constituant la cellule électrolytique selon la revendication 5 ou 6, et un moyen pour décharger l'eau ozonisée produite par la cellule électrolytique dans une direction à angle droit ou une direction oblique par rapport aux surfaces de l'anode, de la membrane d'électrolyte polymère solide et de la cathode est disposé au niveau de l'autre parmi l'anode et la cathode.

8. Dispositif de production d'eau ozonisée selon la revendication 7, dans lequel un moyen pour fournir de l'eau matière première dans une direction à angle droit ou une direction oblique par rapport aux surfaces de l'anode, de la membrane d'électrolyte polymère solide et de la cathode est disposé sur l'anode constituant la cellule électrolytique selon la revendication 5 ou 6 ; un tube inducteur de convexion est disposé sur la cathode dans une direction à angle droit ou une direction oblique par rapport à la cathode ; la cellule électrolytique est placée dans une cuve de traitement d'eau ; et la cellule électrolytique fonctionne par convexion naturelle associée aux gaz hydrogène, oxygène et ozone générés par la cathode et l'anode.

9. Dispositif de production d'eau ozonisée selon la revendication 7 ou 8, dans lequel la cellule électrolytique selon la revendication 5 ou 6 est installée au niveau d'un robinet d'eau du robinet ou d'un orifice d'évacuation d'eau non purifiée d'un type similaire.

10. Procédé pour produire de l'eau ozonisée, dans lequel de l'eau ozonisée est produite par utilisation de la cellule électrolytique selon la revendication 5 ou 6, par l'opération consistant à permettre à de l'eau matière première de s'écouler depuis l'une ou l'autre parmi l'anode et la cathode pour passer dans une direction à angle droit ou une direction oblique vers les faces de l'anode, de la membrane d'électrolyte polymère solide et de la cathode.

11. Procédé pour produire de l'eau ozonisée selon la revendication 10, dans lequel de l'eau ozonisée est produite par utilisation de la cellule électrolytique selon la revendication 5 ou 6, par l'opération consistant à permettre à de l'eau contenant des quantités en traces d'ions de métal alcalin ou d'ions de métal alcalino-terreux, servant d'eau matière première, de s'écouler depuis le côté anode vers le côté cathode pour qu'elle passe dans une direction à angle droit ou une direction oblique vers les faces de l'anode, de la membrane d'électrolyte polymère solide et de la cathode, cependant que la précipitation d'hydroxydes sur la cathode et la membrane est limitée.

12. Procédé de désinfection comprenant la production d'eau ozonisée selon le procédé de la revendication 10 ou 11, et la désinfection de l'eau devant être traitée avec ladite eau ozonisée.

13. Procédé de traitement d'eaux usées ou de fluides usés comprenant la production d'eau ozonisée selon le procédé de la revendication 10 ou 11, et le traitement des eaux usées ou des fluides usés avec ladite eau ozonisée.

14. Procédé de désinfection selon la revendication 12, dans lequel le fluide devant être désinfecté, servant d'eau matière première, est désinfecté par utilisation de la cellule électrolytique selon la revendication 5 ou 6, par l'opération consistant à laisser le fluide devant être désinfecté s'écouler depuis l'une parmi l'anode et la cathode afin qu'il passe dans une direction à angle droit ou une direction oblique vers les faces de l'anode, de la membrane d'électrolyte polymère solide et de la cathode.

15. Procédé de traitement d'eaux usées ou de fluides usés selon la revendication 13, dans lequel les eaux usées ou les fluides usés sont traités par utilisation de la cellule électrolytique selon la revendication 5 ou 6, par l'opération consistant à laisser les eaux usées ou les fluides usés, servant d'eau matière première, s'écouler depuis l'une parmi l'anode et la cathode afin qu'ils passent dans une direction à angle droit ou une direction oblique vers les faces de l'anode, de la membrane d'électrolyte polymère solide et de la cathode.
